# EUROPÄISCHE PATENTSCHRIFT

(11) **EP 2 941 137 B1**
(45) Veröffentlichungstag und Bekanntmachung des Hinweises auf die Patenterteilung: **28.09.2016**
(21) Anmeldenummer: 14784091.2
(22) Anmeldetag: 15.10.2014
(51) Int. Cl.: A42B 3/18, G02C 3/02, G02C 5/22

(54) **SCHUTZBRILLE ZUR ANBRINGUNG AN EINEM SCHUTZHELM UND MIT DER SCHUTZBRILLE AUSGESTATTETER SCHUTZHELM**
PROTECTIVE GLASSES FOR FITTING ON A PROTECTIVE HELMET, AND PROTECTIVE HELMET PROVIDED WITH THE PROTECTIVE GLASSES
LUNETTES DE PROTECTION À MONTER SUR UN CASQUE DE PROTECTION ET CASQUE DE PROTECTION ÉQUIPÉ DES LUNETTES DE PROTECTION

(30) Priorität: 24.10.2013 DE 102013017830
(43) Veröffentlichungstag der Anmeldung: 11.11.2015
(73) Patentinhaber: Pfanner Schutzbekleidung GmbH, 6842 Koblach (AT)
(72) Erfinder: PFANNER, Anton, A-6845 Hohenems (AT); GREBER, Martin, A-6840 Götzis (AT)
(74) Vertreter: Schumacher & Willsau
(86) Internationale Anmeldenummer: PCT/EP2014/072158
(87) Internationale Veröffentlichungsnummer: WO 2015/059014

(56) Entgegenhaltungen:
- EP-A1- 1 853 129
- EP-A1- 2 292 112
- US-A1- 2009 235 437
- US-A1- 2013 047 310
- US-B1- 6 892 393

## Beschreibung

Die Erfindung betrifft eine Schutzbrille zur Anbringung an einem Schutzhelm, mit einer langgestreckten, wenigstens in Längsrichtung gekrümmten Sichtscheibe zum Schutz der Augen, mit zwei Bügeln, die an einem inneren Ende jeweils an dem Helm anlenkbar oder angelenkt sind und an einem äußeren Ende jeweils an der Sichtscheibe verrastbar angelenkt sind, so dass die Sichtscheibe aus einer vor den Augen einer den Helm tragenden Person gelegenen Schutzposition nach oben in eine Verstauposition bewegbar ist, wobei jeder Bügel einen Brillenarm und einen Brillentragarm aufweist, die zur Veränderung der Länge des Bügels teleskopisch ineinander verschiebbar sind und durch eine form- und/oder reibschlüssige Passung an einer gegenseitigen Verschiebung hinderbar sind.

Eine Schutzbrille der vorgenannten Art ist aus dem Dokument US 6,892,393 B1 bekannt. Die bekannte Schutzbrille weist statt eines Gestells mit zwei Bügeln, in das zwei Brillengläser eingepasst sind, eine durchgehende Sichtscheibe auf, welche das Gestell und die beiden Brillengläser ersetzt. Die Sichtscheibe weist an ihren äußeren Enden auf der dem Kopf benachbarten Seite zwei abgewinkelte Abschnitte auf, welche im Wesentlichen parallel zueinander sind. An diesen beiden abgewinkelten Abschnitten sind die beiden Bügel an ihrem äußeren oder distalen Ende jeweils verrastbar angelenkt. An ihrem inneren oder proximalen Ende sind die beiden Bügel jeweils an einem Stecker angelenkt. Die Stecker sind in Schlitze einführbar, die in dem unteren Rand eines Schutzhelms gebildet sind. Wenn ein Schutz der Augen nicht benötigt wird, wird die Sichtscheibe aus einer vor den Augen einer den Helm tragenden Person gelegenen Schutzposition um ihre Anlenkstellen an den Bügeln nach oben in eine Verstauposition gekippt. Bei diesem Kippvorgang verändern die beiden Bügel weder ihre Lage noch ihre Länge. Die beiden Bügel sind an ihren äußeren Enden mit ringförmigen Lagern versehen, in welchen zwei an der Sichtscheibe gebildete Naben um ihre Anlenkachsen drehbar gelagert sind. Die Anordnung ist dabei so getroffen, dass die beiden Anlenkachsen miteinander fluchten. Jedes ringförmige Lager ist mit axialen Nuten in den Positionen 12 Uhr, 9 Uhr und 10:30 Uhr versehen, um die Sichtscheibe in ihrer Lage zu halten, wenn sie in eine untere Position (0°), eine Zwischenposition (75°) oder eine voll nach oben bewegte Position (90°) geschwenkt oder gekippt ist. Die Verrastung ist dabei jeweils eine weiche Verrastung, das heißt eine Verrastung, die durch Verschwenken oder Verkippen der Sichtscheibe von Hand leicht überwunden werden kann. Es ist deshalb als eine Alternative zu der vorgenannten Verrastung der Sichtscheibe an den beiden Bügeln auch eine Reibpassung vorgesehen, die eine stufenlose Winkelverstellung der Sichtscheibe erlaubt. In der Verstauposition taucht die Sichtscheibe bei Betrachtung in einer Seitenansicht etwa nur zu einem Drittel in den durch den Schutzhelm umschlossenen Raum ein, während der übrige Teil der Sichtscheibe unter dem Schutzhelm sichtbar bleibt. In dieser Verstauposition kann die den Schutzhelm tragende Person einfach unter der Sichtscheibe nach vorne durchschauen. Wenn der Schutzhelm im Forstbetrieb eingesetzt wird, ist es vorstellbar, dass sich in dieser Verstauposition der Sichtscheibe Äste an der Schutzbrille verhaken, was mit der Gefahr verbunden ist, dass der Schutzhelm seinem Träger vom Kopf gerissen wird.

Bei einer weiteren bekannten Schutzbrille, die aus dem Dokument EP 1 853 129 B1 bekannt ist, ist diese Gefahr etwas geringer, weil die Länge der Bügel der Brille bei dem Bewegen der Sichtscheibe in die und aus der Verstauposition verändert wird. Das erlaubt anscheinend, die Verstauposition weiter in den Helm hinein zu verlegen. Zu diesem Zweck sind die beiden Arme jedes Bügels durch ein Zwischengelenk miteinander verbunden. Eine Verkürzung der Bügellänge während des Hochbewegens der Sichtscheibe bringt den Vorteil mit sich, dass die Sichtscheibe in ihrer Verstauposition gänzlich von dem Helm umschlossen ist. Allerdings stehen in der Verstauposition der Sichtscheibe beide Bügel über den unteren Rand des Helms über und sind so durch Äste erfassbar. Das Bewegen der Sichtscheibe in die Verstauposition kann zwar mit einer Hand erfolgen, jedoch erfordert das Zurückbewegen der Sichtscheibe in die Schutzposition beide Hände. Sowohl im Industrieeinsatz als auch im Forstbetrieb ist das hinderlich, weil die den Helm tragende Person nach einer Pause, in der sich die Sichtscheibe in der Verstauposition befindet, üblicherweise das Werkzeug bereits in einer Hand hat, so dass sie nur noch die andere Hand frei hat, um die Sichtscheibe zurück in die Schutzposition zu bewegen. Bei diesem Zurückbewegen müssen nicht nur die beiden Arme jedes Bügels in ihrem Zwischengelenk verschwenkt werden, sondern zusätzlich muss auch die Sichtscheibe um ihre Anlenkachsen an den Bügeln verschwenkt werden, um eine bestimmte Verkippung der Sichtscheibe gegenüber den Brillenarmen erneut einzustellen. Das ist mit einer Hand aber nicht ohne weiteres zu machen. Das Verstauen der Sichtscheibe oder der Schutzbrille an sich ist meist unproblematisch, weil die den Schutzhelm tragende Person in diesem Augenblick Zeit hat, denn sie ist dabei, die Arbeit zu unterbrechen. Wenn sie aber wieder zu arbeiten beginnt, zum Beispiel zu sägen, hat sie in der einen Hand die Säge und versucht, mit der anderen Hand möglichst schnell die Sichtscheibe in die Schutzposition zu bringen, da es darauf ankommt, den Schutz schnell wieder zu erlangen. Mit einer Hand ist das aber kaum machbar.

Aufgabe der Erfindung ist es, eine Schutzbrille der eingangs genannten Art so auszubilden, dass die oben geschilderten Probleme vermieden werden. Außerdem soll ein mit der Schutzbrille ausgestatteter Schutzhelm geschaffen werden.

Diese Aufgabe ist ausgehend von einer Schutzbrille der eingangs genannten Art erfindungsgemäß dadurch gelöst, dass die Sichtscheibe in Längsrichtung stetig gekrümmt ist, dass die Brillenarme an äußeren Enden der Bügel in Richtung zur Sichtscheibe hin gekröpft sind, so dass sie im Wesentlichen entsprechend der Krümmung der Sichtscheibe ausgerichtet sind und tangential an die Sichtscheibe anschließen, dass die Brillenarme Anlenkachsen haben, die nicht miteinander fluchten, und dass die Bügel mit der Sichtscheibe in mehreren wählbaren Stellungen formschlüssig hart verrastbar sind.

Erfindungsgemäß kann so die gesamte Schutzbrille in einem Helm verstaut werden, wobei sich dieses Verstauen schnell und sicher mit einer Hand bewerkstelligen lässt und wobei eine vor dem Verstauen, also in der Schutzposition vorhandene Verkippung der Sichtscheibe auch nach diesem Ein-Hand-Betrieb wieder verfügbar ist. Üblicherweise wird der Schwenkwinkel der Sichtscheibe gegenüber den Bügeln (das ist die sogenannte Verkippung) bei an dem Schutzhelm montierter Schutzbrille eingestellt, wenn der Schutzhelm noch nicht auf den Kopf aufgesetzt ist. Die einmal eingestellte Verkippung bleibt bei der Bewegung der Sichtscheibe, genauer gesagt der gesamten Schutzbrille in die und aus der Verstauposition dank der harten Verrastung erhalten, das heißt die Verkippung verändert sich während dieses Vorganges nicht, im Gegensatz zu den beiden oben beschriebenen bekannten Schutzbrillen. Bei der Schutzbrille nach dem oben bereits genannten Dokument US 6,892,393 B1 muss die einmal eingestellte Verkippung verändert werden, weil nur die Sichtscheibe und diese nur durch Verkippen gegenüber den Bügeln in die Verstauposition bewegbar ist. Bei der aus dem oben ebenfalls bereits genannten Dokument EP 1 853 129 B1 bekannten Schutzbrille verändert sich die einmal eingestellte Verkippung bei dem Verstauen der Schutzbrille zwangsläufig, weil die Sichtscheibe an jedem Ende über drei Gelenke an den Helm angeschlossen ist und sich die Winkeleinstellung an jedem Gelenk während der Bewegung der Sichtscheibe in die und aus der Verstauposition und der dabei erfolgenden Verkürzung der Länge der Bügel stufenlos und völlig frei verändert. Die den Helm tragende Person kann hingegen die Schutzbrille nach der Erfindung mit einer Hand in die Verstauposition schieben, ohne dass irgendeine Längenveränderung der Bügel zu erfolgen hat, weil die harte Verrastung zwischen Sichtscheibe und Bügeln verhindert, dass sich die Verkippung der Sichtscheibe bei diesem Vorgang verändert.

Mit dem zur Definition der Erfindung verwendeten Begriff "formschlüssig hart verrastbar" ist eine formschlüssige Verrastung gemeint, die unter Kraftaufwand elastisch nachgiebig ist, also nicht nur das Überwinden einer Reibung verlangt, sondern zusätzlich auch einen Biegevorgang. Es muss, mit anderen Worten, Kraft aufgewandt werden, damit die formschlüssige Verrastung elastisch nachgibt, also der Formschluss elastisch nachgiebig aufgehoben wird. Die harte Verrastung stellt sicher, dass bei dem Vorgang des Bewegens der Schutzbrille in die und aus der Verstauposition keine Veränderung der Verkippung der Sichtscheibe gegenüber den Bügeln stattfindet. Diese Verkippung wird bei der Schutzbrille nach der Erfindung wie bereits erwähnt bei abgenommenem Helm zuvor einmal eingestellt, erst auf der einen Seite und dann auf der anderen Seite, während die Schutzbrille an dem Helm montiert ist und montiert bleiben kann.

Die Erfindung schafft außerdem einen Schutzhelm mit einer solchen Schutzbrille nach der Erfindung. Ein Schutzhelm, mit dem die Schutzbrille nach der Erfindung kombinierbar ist, ist zum Beispiel aus dem Dokument DE 10 2010 027 012 A1 bekannt, das auf den Anmelder selbst zurückgeht.

Vorteilhafte Ausgestaltungen der Schutzbrille und des Schutzhelms nach der Erfindung bilden die Gegenstände der abhängigen Ansprüche.

In einer Ausgestaltung der Schutzbrille nach der Erfindung ist die Sichtscheibe in Längsrichtung kreisbogenförmig gekrümmt. Das erleichtert das Anschließen der Bügel an die Sichtscheibe derart, dass eine gewünschte Verkippung zwischen Sichtscheibe und Bügeln eingestellt und dann während des Einsatzes der Schutzbrille aufrechterhalten werden kann.

In einer weiteren Ausgestaltung der Schutzbrille nach der Erfindung sind die Brillenarme jeweils in ihren Anlenkpunkten an der Sichtscheibe um einen Winkel von 30° bis 35° gegenüber einer Tangente jeweils in dem Anlenkpunkt nach innen abgewinkelt. Das bringt eine weitere Erleichterung bei dem Einstellen und Aufrechterhalten einer gewünschten Verkippung mit sich.

In einer weiteren Ausgestaltung der Schutzbrille nach der Erfindung ist an der Sichtscheibe benachbart zu den Anlenkachsen der Bügel jeweils ein Vorsprung ausgebildet, der mit einem benachbarten Kranz von Vertiefungen, welcher an jedem Brillenarm ausgebildet ist, formschlüssig und elastisch verrastbar ist. Das erleichtert das Erzielen und Aufrechterhalten einer gewünschten Verkippung.

In einer weiteren Ausgestaltung der Schutzbrille nach der Erfindung weist jeder Kranz wenigstens drei Vertiefungen auf. Für die Sichtscheibe ergeben sich so drei mögliche Verkippungspositionen gegenüber den Bügeln. Die den Helm tragende Person hat somit nur drei mögliche Positionen für die Verkippung verfügbar, die sich "blind" einstellen lassen und die so lange erhalten bleiben, solange keine Änderung in der Verkippung erwünscht ist. Die Sichtscheibe kann daher mit einer Hand auf- und abbewegt werden, ohne dass sich die Sichtscheibe gegenüber den Bügeln verstellt, das heißt ohne, dass sich die Verkippung während dieses Vorganges verändert. Die Bügel machen also die Bewegung die Sichtscheibe mit, ohne dass dich die Verkippung verändert.

In einer weiteren Ausgestaltung der Schutzbrille nach der Erfindung sind die Bügel in einem Bereich um ihre Anlenkachsen und wenigstens bis zu dem Kranz von Vertiefungen um eine Dicke der Sichtscheibe ausgespart. Dadurch wird erreicht, dass die Innenseite der Brillenarme im Wesentlichen der Krümmung der Außenseite der Sichtscheibe folgt, abgesehen von dem Winkel, um den die Brillenarme gekröpft sind.

In einer weiteren Ausgestaltung der Schutzbrille nach der Erfindung sind die Bügel an ihren inneren Enden jeweils mit einem Zapfen versehen, mit dem sie an dem Helm anlenkbar und wenigstens in der Verstauposition der Brille reib- oder formschlüssig verrastbar sind. Die reib- oder formschlüssige Verrastung wird dabei zweckmäßig so gewählt, dass sie wesentlich weicher als die harte Verrastung zwischen Sichtscheibe und Bügeln ist und somit wesentlich leichter als diese überwindbar ist. Das gewährleistet, dass die Schutzbrille ohne Veränderung der Verkippung in die und aus der Verstauposition bewegt werden kann und die Verstauposition nicht ungewollt wieder verlassen kann.

In einer weiteren Ausgestaltung der Schutzbrille nach der Erfindung weist der Brillentragarm jedes Bügels eine Längsnut auf, die für den Brillenarm des Bügels eine Schwalbenschwanzführung bildet. Das stellt sicher, dass bei dem Einstellen der Verkippung jeder Bügel in sich, also um seine Längsachse verwindbar ist, ohne dass sich der Brillenarm und der Brillentragarm voneinander lösen oder ihre gegenseitige Relativposition auf andere Weise verändern.

In einer weiteren Ausgestaltung der Schutzbrille nach der Erfindung ist die Längsnut jedes Brillentragarms quer zu dessen Längsrichtung offen. Das erleichtert das Verwinden jedes Bügels in sich, also um seine Längsachse.

In einer weiteren Ausgestaltung der Schutzbrille nach der Erfindung besteht jeder Brillenarm aus einem elastisch biegsamen Material und weist ein im Querschnitt flaches, in Richtung zu dem anderen Bügel hin offenes U-Profil auf. Das verbessert die Führung jedes Brillenarms in dem ihm zugeordneten Brillentragarm.

In einer weiteren Ausgestaltung der Schutzbrille nach der Erfindung ist der Kranz von Vertiefungen in einer an dem Brillenarm angeformten Rippe gebildet, welche im Bereich jeder Anlenkstelle zwei U-Schenkel des flachen U-Profils miteinander verbindet. Dadurch wird weiter sichergestellt, dass eine Verwindung des Bügels in sich, also um seine Längsachse nicht dazu führt, dass die Verkippung verändert wird.

In einer weiteren Ausgestaltung der Schutzbrille nach der Erfindung sind die Brillenarme an den Brillentragarmen in definierten Längspositionen formschlüssig und elastisch arretierbar. Dadurch wird noch sicherer gewährleistet, dass die Bügel bei der Bewegung der Schutzbrille in die und aus der Verstauposition ihre Länge nicht verändern.

In einer weiteren Ausgestaltung der Schutzbrille nach der Erfindung ist in einem Stegbereich der Sichtscheibe an der Sichtscheibe ein Auflagebett für den Nasenrücken und/oder die Nasenflanken angebracht. Dadurch wird sichergestellt, dass die Schutzbrille in jeder Verkippungsposition der Sichtscheibe der den Schutzhelm tragenden Person keinen Schmerz bereitet.

In einer weiteren Ausgestaltung der Schutzbrille nach der Erfindung sind die beiden Bügel spiegelgleich ausgebildet. Das erleichtert die Herstellung und die Lagerhaltung der Schutzbrille nach der Erfindung.

In einer Ausgestaltung des Schutzhelms nach der Erfindung ist dieser durch eine Helmschale und eine Innenausstattung gekennzeichnet, die wenigstens im vorderen Bereich des Helms zwischen sich einen Raum begrenzen, in den die Schutzbrille zum Verstauen hochklappbar ist. Dadurch ist gewährleistet, dass die Schutzbrille in der Verstauposition gänzlich, also einschließlich ihrer Bügel von dem Helm umschlossen ist.

In einer weiteren Ausgestaltung des Schutzhelms nach der Erfindung ist ein Stirnband von dessen Innenausstattung mit Öffnungen zum Anlenken der Bügel der Schutzbrille versehen, wobei die Lage der Öffnungen so gewählt ist, dass die Schutzbrille ohne Längenveränderung der Bügel in die und aus der Verstauposition bewegbar ist. Ein weiterer Vorteil dieser Ausgestaltung ist, dass bei der Anpassung der Innenausstattung an die Größe des Kopfes eines Helmträgers gleichzeitig die Schutzbrille entsprechend mit auf die Kopfgröße eingestellt wird.

Ausführungsbeispiele der Erfindung werden im Folgenden unter Bezugnahme auf die Zeichnungen näher beschrieben.

Es zeigen:
- Figur 1: eine bevorzugte Ausführungsform einer Schutzbrille nach der Erfindung in perspektivischer Darstellung in einer Ansicht schräg von oben,
- Figur 2: die Schutzbrille nach Fig. 1 in einer Ansicht von links,
- Figur 3: die Schutzbrille nach Fig. 1 in Draufsicht,

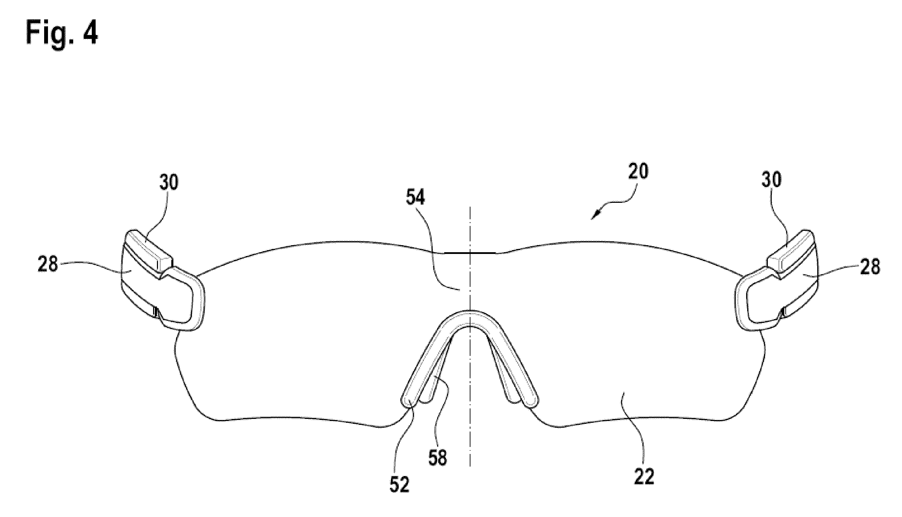

- Figur 4: die Schutzbrille nach Fig. 3 in Vorderansicht,
- Figur 5: eine Teilansicht der Schutzbrille nach Fig. 3 in Richtung eines Pfeils V, wobei aber ein Brillentragarm weggelassen worden ist, um einen Brillenarm in seiner gesamten Länge zu zeigen,
- Figur 6: eine Teilansicht der Schutzbrille nach Fig. 3 in Richtung eines Pfeils VI in Fig. 3,
- Figur 6a: eine Querschnittansicht nach der Linie Via - Via in Fig. 6,
- Figur 7: eine Teilansicht der Schutzbrille wie in Fig. 6, wobei aber ein Bügel der Schutzbrille auf eine größere Bügellänge eingestellt ist,
- Figur 8: eine gleiche Teilansicht wie in Fig. 5, wobei aber ein Brillentragarm des Bügels gezeigt ist, und zwar in drei unterschiedlichen Verkippungspositionen,
- Figur 9: in Vorderansicht einen Schutzhelm nach der Erfindung, der mit einer Schutzbrille nach den Figuren 1 bis 8 ausgerüstet und zur Hälfte weggeschnitten dargestellt ist, wobei die Schutzbrille heruntergeklappt in eine Schutzposition gezeigt ist,
- Figur 10: den Schutzhelm nach Figur 9 in einer Ansicht von rechts,
- Figur 11: ebenfalls in einer Ansicht von rechts den Schutzhelm nach Figur 9, wobei die Schutzbrille aber mit einer anderen Verkippungsposition ihrer Sichtscheibe gezeigt ist,
- Figur 12: den Schutzhelm nach der Erfindung in einer gleichen Ansicht wie in Fig. 9, wobei aber die Schutzbrille nach der Erfindung mit ihrer Sichtscheibe hochgeklappt in eine Verstauposition gezeigt ist,
- Figur 13: den Schutzhelm nach Fig. 12 in einer Ansicht von rechts, und
- Figur 14: den Schutzhelm nach der Erfindung in einer Seitenansicht, in der die Schutzbrille weggelassen worden ist.

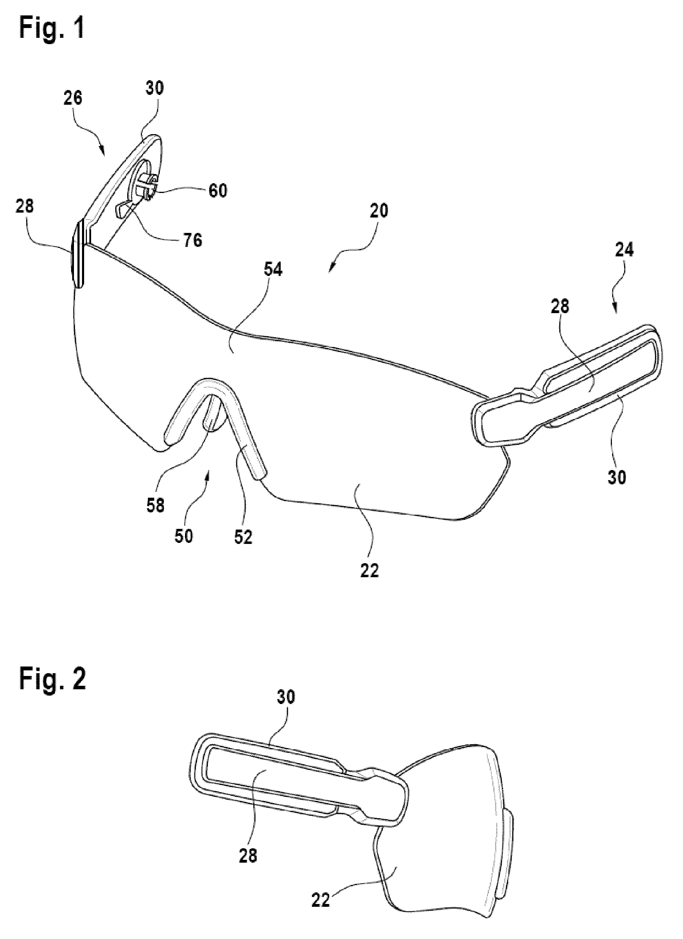

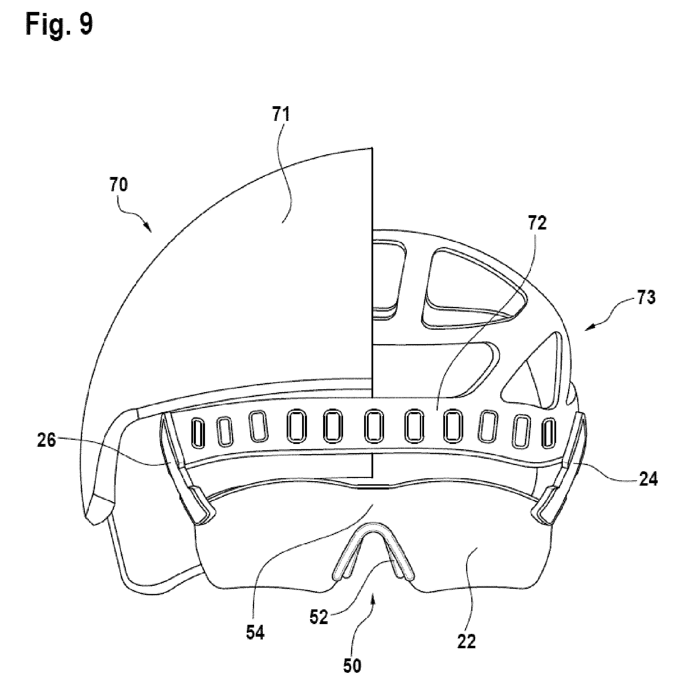

Eine bevorzugte Ausführungsform einer Schutzbrille nach der Erfindung ist in Fig. 1 in einer Ansicht schräg von oben gezeigt und insgesamt mit 20 bezeichnet. Die Schutzbrille 20 ist zur Anbringung an einem Schutzhelm 70 bestimmt, der in den Figuren 9 bis 13 gezeigt ist, auf die weiter unten näher eingegangen wird. Die Schutzbrille 20 umfasst eine langgestreckte, wenigstens in Längsrichtung stetig gekrümmte Sichtscheibe 22 zum Schutz der Augen. Bei der dargestellten bevorzugten Ausführungsform der Schutzbrille 20 ist die Sichtscheibe 22 auch in Querrichtung stetig gekrümmt. Die Sichtscheibe 22 besteht in der dargestellten Ausführungsform aus farblosem, klarem Kunststoff, wie z. B. Polycarbonat. Sie entspricht allen Anforderungen, die die Norm EN 166 an einen persönlichen Augenschutz stellt. Die Sichtscheibe 22 könnte auch als Ultraviolettschutzfilter nach EN 170 oder als Sonnenschutzfilter für den betrieblichen Gebrauch nach EN 172 ausgebildet sein. In der dargestellten Ausführungsform schützt die Schutzbrille insbesondere gegen Stöße verschiedener Energie, optische Strahlung, Tropfen und Spritzer, Staub und Gase, aber auch gegen Partikel aller Art, wie sie z. B. bei der mechanischen Bearbeitung von Metall oder Stein entstehen.

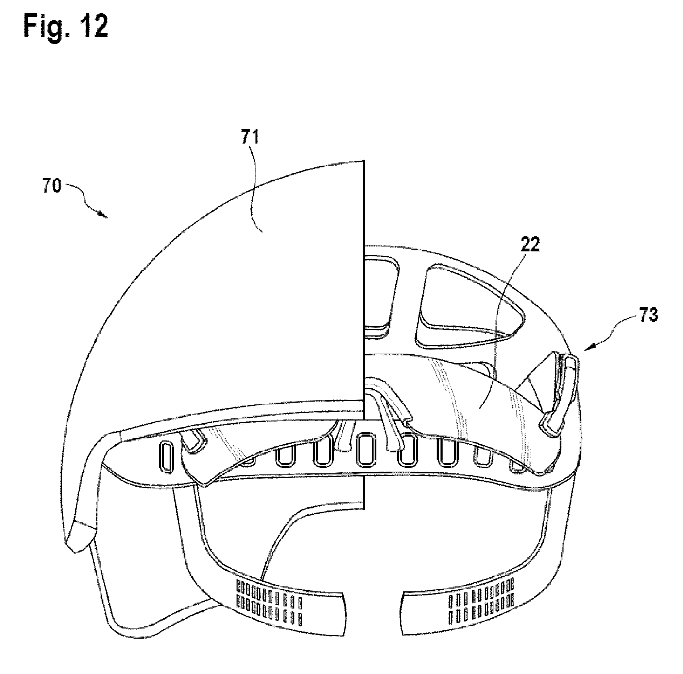

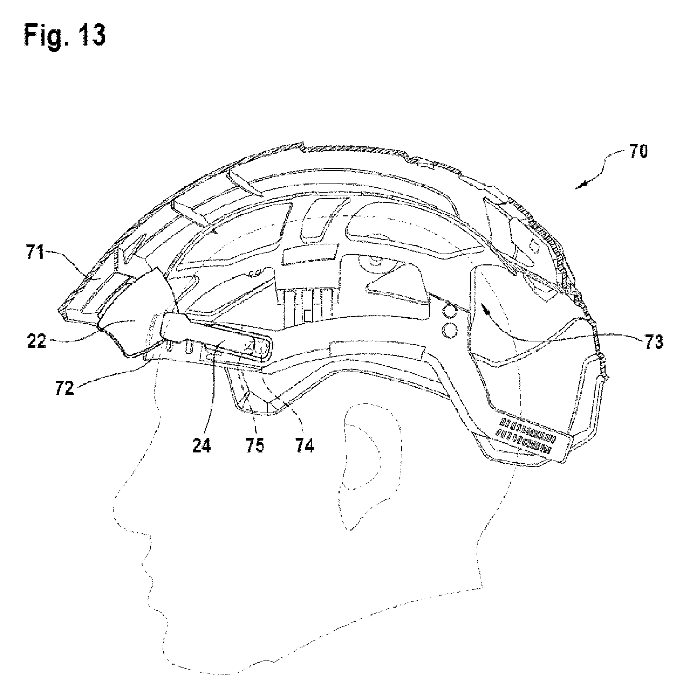

Die Schutzbrille 20 umfasst weiter zwei Bügel, die insgesamt mit 24 bzw. 26 bezeichnet sind. Die Bügel 24, 26 sind an einem inneren oder proximalen Ende, bei dem es sich um das zu der Sichtscheibe 22 entgegengesetzte Ende handelt, jeweils an dem Helm 70 verrastbar anlenkbar und an einem äußeren oder distalen Ende, bei welchem es sich um das der Sichtscheibe 22 benachbarte Ende handelt, jeweils an der Sichtscheibe verrastbar angelenkt. Die Sichtscheibe 22 ist so aus einer vor den Augen einer den Helm tragenden Person gelegenen Schutzposition, die in den Figuren 9 bis 11 gezeigt ist, nach oben in eine Verstauposition bewegbar, die in den Figuren 12 und 13 gezeigt ist. Mit der Sichtscheibe 22 sind die Bügel 24, 26 in die eine oder andere Position bewegbar, so dass also die Schutzbrille insgesamt eine Verstauposition und eine Schutzposition aufweist.

Jeder Bügel 24, 26 umfasst ein Brillenarm 28 und einen Brillentragarm 30, die zur Veränderung der Länge der Bügel 24, 26 teleskopisch ineinander verschiebbar sind. Die Bügel 24, 26 sind spiegelgleich ausgebildet, weshalb in den Zeichnungen die einzelnen Teile der Bügel 24, 26 mit gleichen Bezugszahlen versehen sind.

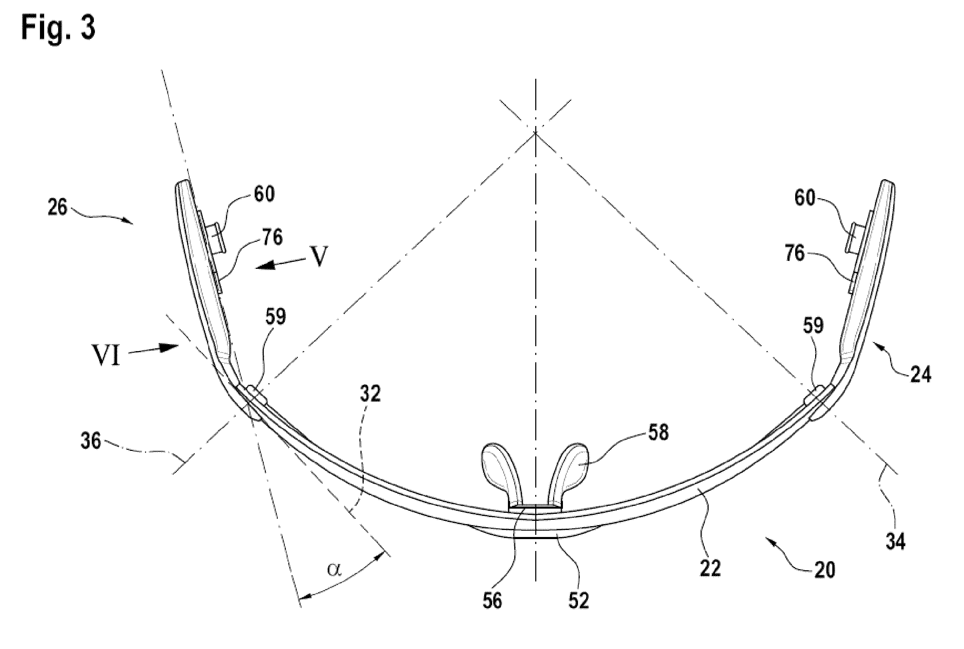

Die Brillenarme 28 sind an den äußeren Enden der Bügel 24, 26 in Richtung zur Sichtscheibe 22 hin gekröpft, so dass sie im Wesentlichen entsprechend der Krümmung der Sichtscheibe 22 ausgerichtet sind und tangential an die Sichtscheibe 22 anschließen, wie es in Fig. 3 zu erkennen ist. Die Sichtscheibe 22 ist bei der dargestellten bevorzugten Ausführungsform in Längsrichtung und in Querrichtung jeweils kreisbogenförmig gekrümmt.

Die Bügel 24, 26 sind jeweils mit ihrem Brillenarm 28 an einem oberen äußeren Ende der Sichtscheibe 22 angelenkt. Die Brillenarme 28 sind jeweils in ihren Anlenkpunkten an der Sichtscheibe 22 um einen Winkel von 30° bis 35° gegenüber einer Tangente 32 jeweils in dem Anlenkpunkt nach innen abgewinkelt. Dieser Winkel ist in Fig. 3 mit α bezeichnet. Die Anlenkachsen der Bügel 24, 26 an der Sichtscheibe 22 sind in Fig. 3 mit 34 bzw. 36 bezeichnet. Es ist deutlich zu erkennen, dass die Anlenkachsen 34 und 36 nicht miteinander fluchten.

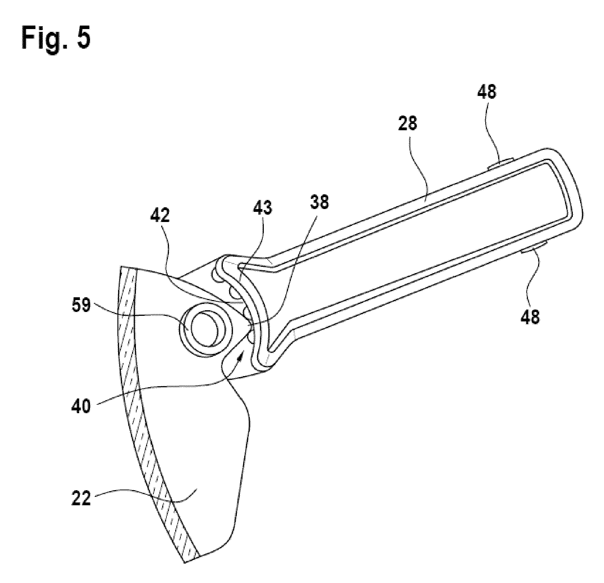

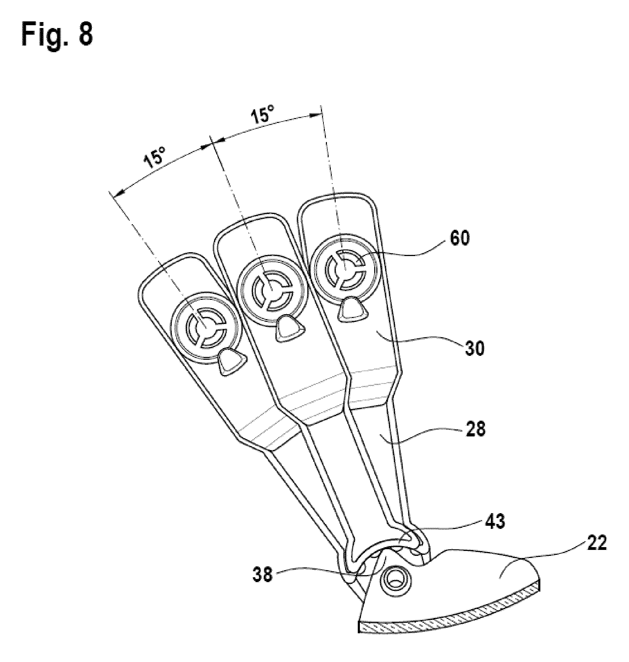

Die Bügel 24, 26 sind mit der Sichtscheibe 22 in mehreren wählbaren Stellungen formschlüssig hart verrastbar. Der Begriff "formschlüssig hart verrastbar" ist weiter oben in der Beschreibungseinleitung bereits definiert worden, worauf zur Vermeidung von Wiederholungen verwiesen sei. Dafür ist an der Sichtscheibe 22 benachbart zu den Anlenkachsen 34, 36 jeweils ein Vorsprung 38 ausgebildet. Jeder Vorsprung 38 ist mit einem benachbarten Kranz 40 von Vertiefungen 42 formschlüssig und elastisch verrastbar. An jedem Brillenarm 28 ist ein derartiger Kranz 40 ausgebildet, wie es am besten in Fig. 5 zu erkennen ist. Bei der dargestellten bevorzugten Ausführungsform der Schutzbrille 20 weist jeder Kranz 40 drei Vertiefungen 42 auf. Die Vertiefungen 42 jedes Kranzes 40 haben einen gegenseitigen Winkelabstand von 15°, wie es in Fig. 8 gezeigt ist.

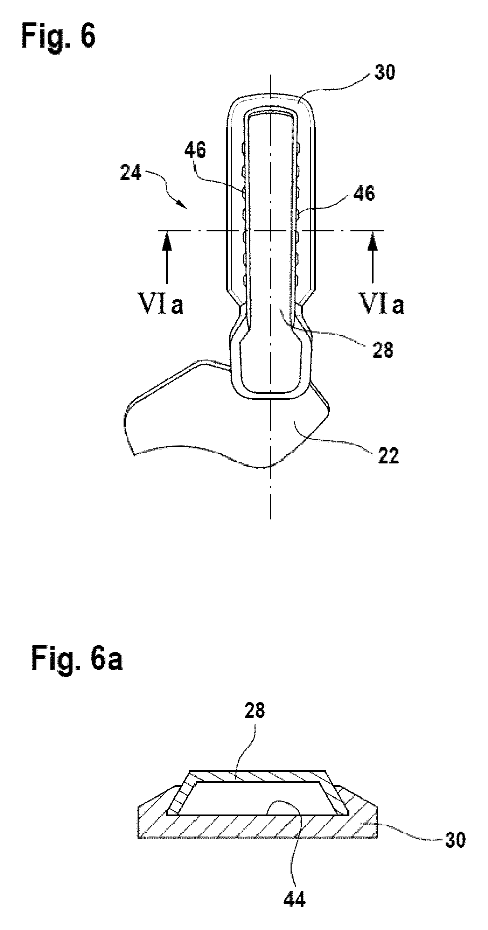

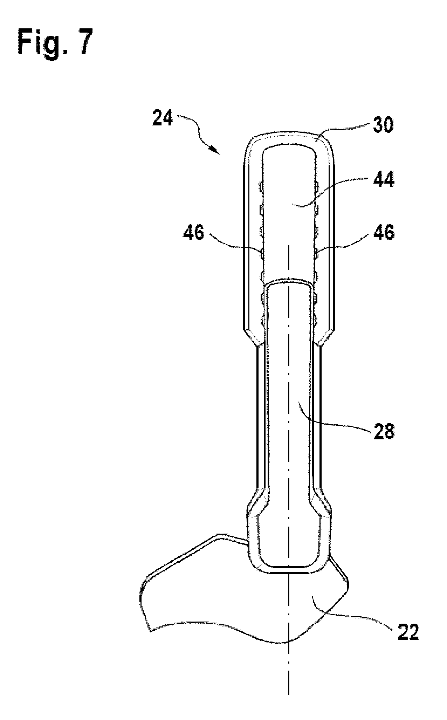

Der Brillentragarm 30 jedes Bügels 24, 26 weist eine Längsnut 44 auf, wie es am besten in Fig. 7 zu erkennen ist. Die Längsnut 44 bildet für den Brillenarm 28 jedes Bügels 24, 26 eine Schwalbenschwanzführung, was als eine Einzelheit in Fig. 6a gezeigt ist, die einen Schnitt nach einer Linie Via - Via in Fig. 6 darstellt. Die Längsnut 44 jedes Brillentragarms 30 ist quer zu dessen Längsrichtung offen, wie es in Fig. 6a ohne weiteres zu erkennen ist. Jeder Brillenarm 28 besteht aus einem elastisch biegsamen Material und weist ein im Querschnitt flaches, in Richtung zu dem anderen Bügel 24 oder 26 hin offenes U-Profil auf. Dadurch ist eine genaue Führung des Brillenarms 28 in dem Brillentragarm 30 gewährleistet.

Die Brillenarme 28 sind an den Brillentragarmen 30 in definierter Längsposition formschlüssig und elastisch arretierbar. Zu diesem Zweck hat die Längsnut 44 am Grund ihrer im Querschnitt V-förmigen seitlichen Begrenzungen jeweils in Armlängsrichtung hintereinander angeordnete Vertiefungen 46, die in den Fig. 6 und 7 gezeigt sind. Jeder Brillenarm 28 ist mit einem Paar von einander gegenüberliegenden Vorsprüngen 48 versehen (Fig. 5), welche in ein Paar von einander gegenüberliegenden Vertiefungen 46 einrastbar sind. Die Arretierbarkeit könnte stattdessen auch durch eine reibschlüssige Passung zwischen dem Brillentragarm 30 und dem Brillenarm 28 erzielt werden.

An der Sichtscheibe 22 ist in einem Steg- oder Mittelbereich 54 ein insgesamt mit 50 bezeichnetes Auflagebett für den Nasenrücken und die Nasenflanken angebracht. Das Auflagebett 50 umfasst eine Leiste 52 aus Kunststoff, welche dicker als die Sichtscheibe 22 ausgebildet ist, um für den Nasenrücken eine größere Auflagefläche zu schaffen. Die Leiste 52 ist im Wesentlichen V-förmig und hat einen im Wesentlichen U-förmigen Querschnitt, welcher einen Rand der Sichtscheibe 22 unterhalb des Stegbereiches 54 aufnimmt. Die Leiste 52 hat im Bereich des V-Scheitels auf ihrer Rückseite eine angeformte Konsole 56, an der eine Nasenspange 58 befestigt ist. Die Nasenspange 58 ist so ausgebildet, dass sie die Nase nur auf den Nasenflanken berührt. Die Leiste 52 ist so ausgebildet, dass sie im Bereich des V-Scheitels die Nase hauptsächlich auf dem Nasenrücken berührt.

Der Brillenarm 28 und der Brillentragarm 30 jedes Bügels 24, 26 bestehen jeweils aus einem elastischen Kunststoff. Die Ausbildung ist dabei so getroffen, dass die Brillentragarme 30 biegesteifer und weniger elastisch als die Brillenarme 28 sind. Letztere sind, wie oben bereit erläutert, speziell so ausgebildet, dass sie, ausgenommen in dem Bereich des Kranzes 40, elastisch verwindbar sind.

Jeder Brillenarm 28 hat im Bereich seiner Anlenkstelle an der Sichtscheibe 22 einen angeformten Zapfen 59, der in eine entsprechende Bohrung in der Sichtscheibe eingeführt und darin verstemmt oder anderweitig unverlierbar gehalten wird.

Jeder Brillentragarm 30 hat an seiner dem Kopf zugewandten Innenseite einen angeformten Zapfen 60. Jeder Zapfen 60 ist an drei auf seinem Umfang beabstandeten Stellen axial geschlitzt und besteht so aus drei federnden Teilzapfen, die jeweils an ihrem äußeren oder distalen Ende außen einen radialen Vorsprung haben. Die so ausgebildeten Zapfen 60 sind jeweils in eine entsprechende Öffnung 74 (in Fig. 13 gestrichelt angedeutet) in einem Stirnband 72 eines Helms 70 einclipsbar. Neben der Öffnung 74 ist auf dem Stirnband 72 ein Vorsprung 75 angeformt. Neben dem Zapfen 60 ist auf der Innenseite des Brillentragarms 30 ein entsprechender Vorsprung 76 angeformt. Wenn die Schutzbrille 20 in die Verstauposition bewegt ist, liegt der Vorsprung 76 auf dem Vorsprung 75 auf, den er zuvor unter elastischer Verformung passiert hat. Dadurch ist gewährleistet, dass die Schutzbrille 20 die Verstauposition nicht ungewollt verlassen kann.

Fig. 9 zeigt in Vorderansicht den Schutzhelm 70, der mit der Schutzbrille 20 ausgerüstet und mit einer zur Hälfte weggeschnittenen Helmschale 71 dargestellt ist, wobei die Schutzbrille 20 heruntergeklappt in eine Schutzposition gezeigt ist, in welcher die Sichtscheibe 22 vor den Augen angeordnet ist und diese schützt.

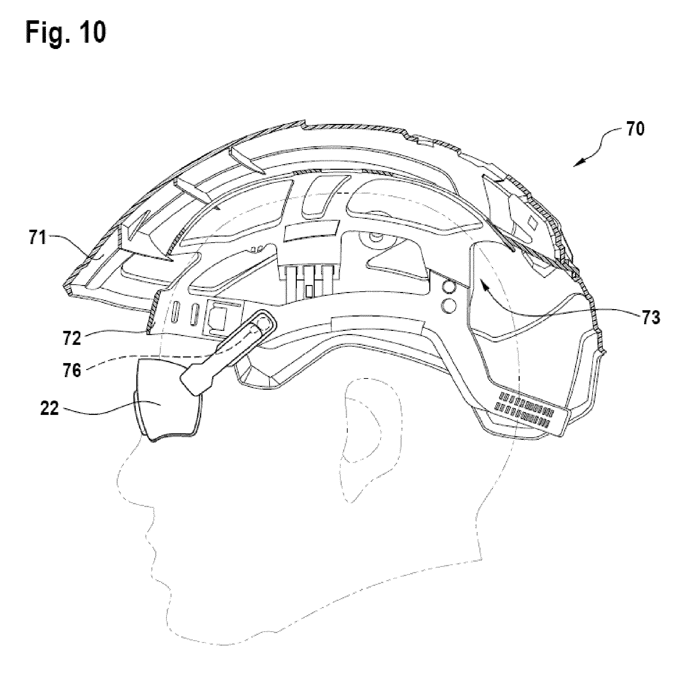

Fig. 10 zeigt den Schutzhelm 70 nach Fig. 9 in einer Ansicht von rechts.

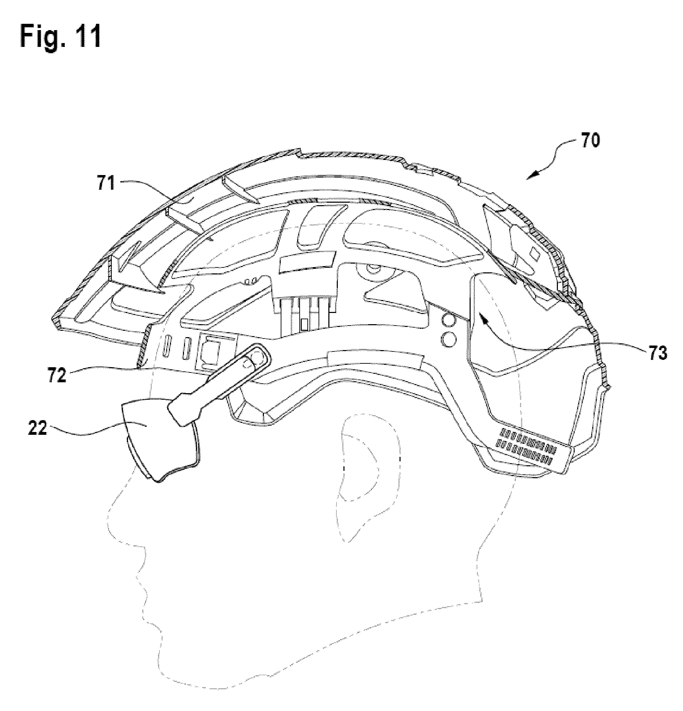

Fig. 11 zeigt ebenfalls in einer Ansicht von rechts den Schutzhelm 70 nach Fig. 9, wobei die Schutzbrille 20 aber mit einer anderen Verkippungsposition ihrer Sichtscheibe 22 gezeigt ist.

Fig. 12 zeigt den Schutzhelm 70 in einer gleichen Ansicht wie in Fig. 9, wobei aber die Schutzbrille 20 mit ihrer Sichtscheibe 22 hochgeklappt in eine Verstauposition gezeigt ist.

Fig. 13 zeigt den Schutzhelm 70 nach Fig. 12 in einer Ansicht von rechts.

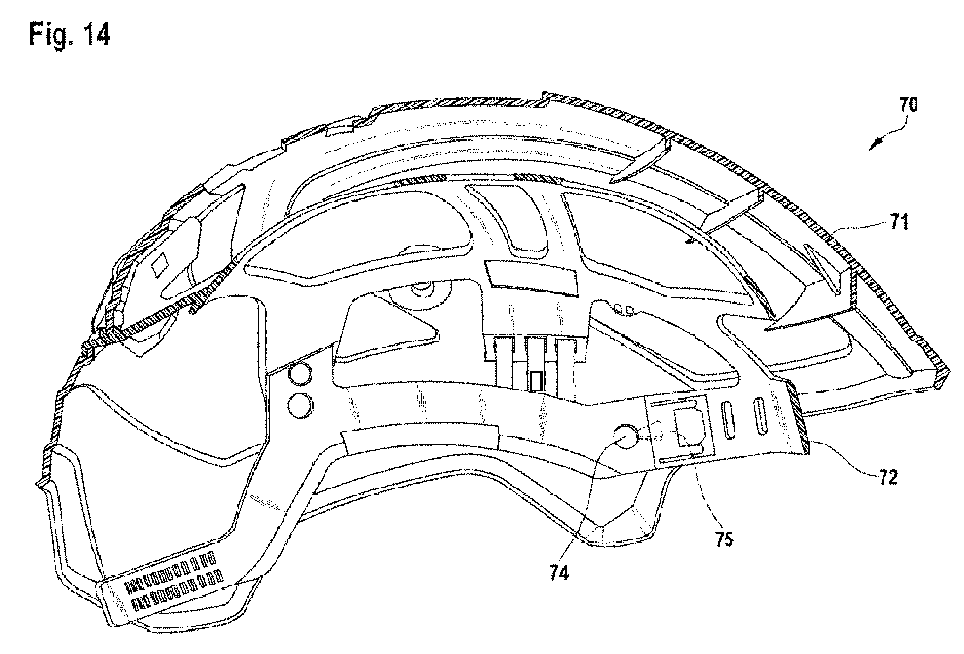

Fig. 14 zeigt den Schutzhelm 70 in einer Seitenansicht, in der die Schutzbrille 20 weggelassen worden ist.

Die Verkippung, die gewählt wird, ist nicht nur eine Frage der Gesichts- oder Kopfform, sondern auch zum Beispiel eine Frage der Belüftung, die durch die Verkippung optimiert oder reduziert werden kann, je nach dem, wie stark die Sichtscheibe 22 verkippt wird und in welche Richtung die Verkippung erfolgt. Die Optimierung des Schutzes kann zum Beispiel darin bestehen, dass, wenn Partikel, die beim Schleifen entstehen, von oben nach unten in Richtung Auge fliegen, durch die Verkippung die Schutzrichtung angepasst werden kann. Die relativ harte Verrastung stellt dabei kein Problem dar, weil die Verkippung normalerweise seltener neu eingestellt wird.

### Bezugszeichenliste

- 20: Schutzbrille
- 22: Sichtscheibe
- 24: Bügel
- 26: Bügel
- 28: Brillenarm
- 30: Brillentragarm
- 32: Tangente
- 34: Anlenkachse
- 36: Anlenkachse
- 38: Vorsprung
- 40: Kranz
- 42: Vertiefung
- 43: Rippe
- 44: Längsnut
- 46: Vertiefung
- 48: Vorsprung
- 50: Auflagebett
- 52: Leiste
- 54: Stegbereich
- 56: Konsole
- 58: Nasenspange
- 59: Zapfen
- 60: Zapfen
- 70: Helm
- 71: Helmschale
- 72: Stirnband
- 73: Innenausstattung
- 74: Öffnung
- 75: Vorsprung
- 76: Vorsprung
- α: Winkel

## Patentansprüche

1. Schutzbrille (20) zur Anbringung an einem Schutzhelm (70),
mit einer langgestreckten, wenigstens in Längsrichtung gekrümmten Sichtscheibe (22) zum Schutz der Augen,
mit zwei Bügeln (24, 26), die an einem inneren Ende jeweils an dem Helm (70) anlenkbar oder angelenkt sind und an einem äußeren Ende jeweils an der Sichtscheibe (22) verrastbar angelenkt sind, so dass die Sichtscheibe (22) aus einer vor den Augen einer den Helm tragenden Person gelegenen Schutzposition nach oben in eine Verstauposition bewegbar ist,
wobei jeder Bügel (24, 26) einen Brillenarm (28) und einen Brillentragarm (30) aufweist, die zur Veränderung der Länge des Bügels (24, 26) teleskopisch ineinander verschiebbar sind und durch eine form- und/oder reibschlüssige Passung an einer gegenseitigen Verschiebung hinderbar sind,
**dadurch gekennzeichnet, dass** die Sichtscheibe (22) in Längsrichtung stetig gekrümmt ist,
dass die Brillenarme (28) an äußeren Enden der Bügel (24 ,26) in Richtung zur Sichtscheibe (22) hin gekröpft sind, so dass sie im Wesentlichen entsprechend der Krümmung der Sichtscheibe (22) ausgerichtet sind und tangential an die Sichtscheibe (22) anschließen,
dass die Brillenarme (28) Anlenkachsen (34, 36) haben, die nicht miteinander fluchten, und
dass die Bügel (24, 26) mit der Sichtscheibe (22) in mehreren wählbaren Stellungen formschlüssig hart verrastbar sind.

2. Schutzbrille nach Anspruch 1, **dadurch gekennzeichnet, dass** die Sichtscheibe (22) in Längsrichtung kreisbogenförmig gekrümmt ist.

3. Schutzbrille nach Anspruch 2, **dadurch gekennzeichnet, dass** die Brillenarme (28) jeweils in ihren Anlenkpunkten an der Sichtscheibe (22) um einen Winkel von 30° - 35° gegenüber einer Tangente (32) jeweils an dem Anlenkpunkt nach innen abgewinkelt sind.

4. Schutzbrille nach einem der vorhergehenden Ansprüchen, **dadurch gekennzeichnet, dass** an der Sichtscheibe (22) benachbart zu den Anlenkachsen (34, 36) der Bügel (24, 26) jeweils ein Vorsprung (38) ausgebildet ist, der mit einem benachbarten Kranz (40) von Vertiefungen (42), welcher an jedem Brillenarm (28) ausgebildet ist, formschlüssig und elastisch verrastbar ist.

5. Schutzbrille nach Anspruch 2, **dadurch gekennzeichnet, dass** jeder Kranz (40) wenigstens drei Vertiefungen (42) aufweist.

6. Schutzbrille nach Anspruch 4 oder 5, **dadurch gekennzeichnet, dass** die Bügel (24, 26) in einem Bereich um ihre Anlenkachsen (34, 36) und wenigstens bis zu dem Kranz (40) von Vertiefungen (42) um eine Dicke der Sichtscheibe (22) ausgespart sind.

7. Schutzbrille nach einem der vorhergehenden Ansprüche, **dadurch gekennzeichnet, dass** die Bügel (24,26) an ihren inneren Enden jeweils mit einem Zapfen (60) versehen sind, mit dem sie an dem Helm (70) anlenkbar und wenigstens in der Verstauposition der Schutzbrille (20) reib- oder formschlüssig verrastbar sind.

8. Schutzbrille nach einem der vorhergehenden Ansprüche, **dadurch gekennzeichnet, dass** der Brillentragarm (30) jedes Bügels (24, 26) eine Längsnut (44) aufweist, die für den Brillenarm (28) des Bügels (24, 26) eine Schwalbenschwanzführung bildet.

9. Schutzbrille nach Anspruch 8, **dadurch gekennzeichnet, dass** die Längsnut (44) jedes Brillentragarms (30) quer zu dessen Längsrichtung offen ist.

10. Schutzbrille nach Anspruch 6 oder 7, **dadurch gekennzeichnet, dass** jeder Brillenarm (28) aus einem elastisch biegsamen Material besteht und ein im Querschnitt flaches, in Richtung zu dem anderen Bügel (24, 26) hin offenes U-Profil aufweist.

11. Schutzbrille nach Anspruch 10, **dadurch gekennzeichnet, dass** der Kranz (40) von Vertiefungen (42) an einer an dem Brillenarm (28) angeformten Rippe (43) gebildet ist, welche im Bereich jeder Anlenkstelle zwei U-Schenkel des flachen U-Profils miteinander verbindet.

12. Schutzbrille nach einem der vorhergehenden Ansprüche, **dadurch gekennzeichnet, dass** die Brillenarme (28) an den Brillentragarmen (30) in definierten Längspositionen formschlüssig und elastisch arretierbar sind.

13. Schutzbrille nach einem der vorhergehenden Ansprüche, **dadurch gekennzeichnet, dass** in einem Stegbereich (54) der Sichtscheibe (22) an der Sichtscheibe (22) ein Auflagebett (50) für den Nasenrücken und/oder die Nasenflanken angebracht ist.

14. Schutzbrille nach einem der vorgehenden Ansprüche, **dadurch gekennzeichnet, dass** die beiden Bügel (24, 26) spiegelgleich ausgebildet sind.

15. Schutzhelm (70) mit einer Schutzbrille (20) nach einem der vorhergehenden Ansprüche.

16. Schutzhelm nach Anspruch 15, **gekennzeichnet durch** eine Helmschale (71) und eine Innenausstattung (73), die wenigstens im vorderen Bereich des Helms (70) zwischen sich einen Raum begrenzen, in den die Schutzbrille (20) zum Verstauen hochklappbar ist.

17. Schutzhelm nach Anspruch 16, **dadurch gekennzeichnet, dass** ein Stirnband (72) von dessen Innenausstattung (73) mit Öffnungen (74) zum Anlenken der Bügel (24, 26) der Schutzbrille (20) versehen ist, wobei die Lage der Öffnungen (74) so gewählt ist, dass die Schutzbrille (20) ohne Längenveränderung der Bügel (24, 26) in die und aus der Verstauposition bewegbar ist.

## Claims

1. Protective glasses (20) for fitting on a protective helmet (70),
having an elongate, at least longitudinally curved lens panel (22) for protecting the eyes,
having two side pieces (24, 26), each of which can have, or has, an inner end articulated on the helmet (70) and have an outer end articulated in a latchable manner on the lens panel (22), and therefore the lens panel (22) can be moved upward out of a protective position, located in front of the eyes of a person wearing the helmet, into a stowage position,
wherein each side piece (24, 26) has a glasses arm (28) and a glasses-carrying arm (30), which can be displaced telescopically one inside the other for the purpose of changing the length of the side piece (24, 26), and can be prevented from mutual displacement by a form fit and/or a friction fit,
**characterized in that** the lens panel (22) is curved continuously in the longitudinal direction,
**in that** the glasses arms (28) are angled in the direction of the lens panel (22) at outer ends of the side pieces (24, 26), and therefore they are oriented essentially in a manner corresponding to the curvature of the lens panel (22) and follow the lens panel (22) tangentially,
**in that** the glasses arms (28) have articulation axes (34, 36), which are not aligned with one another, and
**in that** the side pieces (24, 26) can be hard-latched to the lens panel (22) in a form-fitting manner in a number of selectable positions.

2. The protective glasses as claimed in claim 1, **characterized in that** the lens panel (22) is curved in circular-arc form in the longitudinal direction.

3. The protective glasses as claimed in claim 2, **characterized in that** each of the glasses arms (28) are angled inward, at their points of articulation on the lens panel (22), by an angle of 30°-35° in relation to a tangent (32) to each point of articulation.

4. The protective glasses as claimed in anyone of the preceding claims, **characterized in that** the lens panel (22) has formed on it, adjacent to each of the articulation axes (34, 36) of the side pieces (24, 26), a protrusion (38), which can be latched in a form-fitting and elastic manner to an adjacent ring (40) of depressions (42), said ring being formed on each glasses arm (28).

5. The protective glasses as claimed in claim 2, **characterized in that** each ring (40) has at least three depressions (42).

6. The protective glasses as claimed in claim 4 or 5, **characterized in that** the side pieces (24, 26) are recessed by an amount equal to a thickness of the lens panel (22) in a region around their articulation axes (34, 36) and at least up to the ring (40) of depressions (42).

7. The protective glasses as claimed in anyone of the preceding claims, **characterized in that** the side pieces (24, 26) are provided, at each of their inner ends, with a stub (60), by means of which the side pieces can be articulated on the helmet (70) and can be latched in a friction-fitting or form-fitting manner at least in the stowage position of the protective glasses (20).

8. The protective glasses as claimed in anyone of the preceding claims, **characterized in that** the glasses-carrying arm (30) of each side piece (24, 26) has a longitudinal groove (44), which forms a dovetail guide for the glasses arm (28) of the side piece (24, 26).

9. The protective glasses as claimed in claim 8, **characterized in that** the longitudinal groove (44) of each glasses-carrying arm (30) is open in a direction transverse to the longitudinal direction of said arm.

10. The protective glasses as claimed in claim 6 or 7, **characterized in that** each glasses arm (28) consists of an elastically flexible material and has a cross-sectionally flat U profile, which is open in the direction of the other side piece (24, 26).

11. The protective glasses as claimed in claim 10, **characterized in that** the ring (40) of depressions (42) is formed on a rib (43), which is integrally formed on the glasses arm (28) and, in the region of each point of articulation, connects two U limbs of the flat U profile to one another.

12. The protective glasses as claimed in anyone of the preceding claims, **characterized in that** the glasses arms (28) can be arrested in a form-fitting and elastic manner on the glasses-carrying arms (30) in defined longitudinal positions.

13. The protective glasses as claimed in anyone of the preceding claims, **characterized in that**, in a bridge region (54) of the lens panel (22), a rest (50) for the bridge of the nose and/or the sides of the nose is fitted on the lens panel (22).

14. The protective glasses as claimed in anyone of the preceding claims, **characterized in that** the two side pieces (24, 26) are of mirror-inverted design.

15. A protective helmet (70) having protective glasses (20) as claimed in one of the preceding claims.

16. The protective helmet as claimed in claim 15, **characterized by** a helmet shell (71) and an interior arrangement (73), which bound between them, at least in the front region of the helmet (70), a space into which the protective glasses (20) can be swung upward for stowage purposes.

17. The protective helmet as claimed in claim 16, **characterized in that** a headband (72) of the interior arrangement (73) is provided with openings (74) for the articulation of the side pieces (24, 26) of the protective glasses (20), wherein the position of the openings (74) is selected such that the protective glasses (20) can be moved into, and out of, the stowage position without the length of the side pieces (24, 26) being changed.

## Revendications

1. Lunettes de protection (20) destinées à être montées sur un casque de protection (70), comprenant un verre (22) allongé, courbé au moins dans la direction longitudinale, pour la protection des yeux,
comprenant deux branches de monture (24, 26) qui peuvent être articulées ou sont articulées au casque (70) à une extrémité intérieure respective et qui sont articulées de manière à pouvoir être encliquetées sur le verre (22) à une autre extrémité respective, de telle sorte que le verre (22) puisse être déplacé d'une position de protection placée devant les yeux d'une personne portant le casque vers le haut dans une position escamotée,
chaque branche de monture (24, 26) présentant un bras de lunettes (28) et un bras de support de lunettes (30) qui peuvent être déplacés télescopiquement l'un dans l'autre pour modifier la longueur des branches de monture (24, 26) et dont le déplacement mutuel peut être empêché par un ajustement par engagement par correspondance de formes et/ou par friction,
**caractérisées en ce que**
le verre (22) présente une courbure constante dans la direction longitudinale,
les bras de lunettes (28) sont courbés aux extrémités extérieures des branches de monture (24, 26) dans la direction du verre (22) de telle sorte qu'ils soient orientés essentiellement de manière correspondant à la courbure du verre (22) et se raccordent tangentiellement au verre (22), les bras de lunettes (28) ont des axes d'articulation (34, 36) qui ne sont pas alignés l'un avec l'autre et
les branches de monture (24, 26) peuvent être encliquetées de manière rigide avec le verre (22) dans plusieurs positions sélectionnables par engagement par correspondance de formes.

2. Lunettes de protection selon la revendication 1, **caractérisées en ce que** le verre (22) est courbé en forme d'arc de cercle dans la direction longitudinale.

3. Lunettes de protection selon la revendication 2, **caractérisées en ce que** les bras de lunettes (28) sont coudés vers l'intérieur à chaque fois dans leurs points d'articulation au verre (22) suivant un angle de 30° à 35° par rapport à une tangente (32) respective au point d'articulation.

4. Lunettes de protection selon l'une quelconque des revendications précédentes, **caractérisées en ce qu'**au niveau du verre (22) à côté des axes d'articulation (34, 36) des branches de monture (24, 26), est à chaque fois réalisée une saillie (38) qui peut être encliquetée par engagement par correspondance de formes et élastiquement avec une couronne adjacente (40) de renfoncements (42) qui est réalisée au niveau de chaque bras de lunettes (28).

5. Lunettes de protection selon la revendication 2, **caractérisées en ce que** chaque couronne (40) présente au moins trois renfoncements (42).

6. Lunettes de protection selon la revendication 4 ou 5, **caractérisées en ce que** les branches de monture (24, 26) sont pourvues d'un évidement ayant l'épaisseur du verre (22) dans une région autour de leurs axes d'articulation (34, 36) et au moins jusqu'à la couronne (40) de renfoncements (42).

7. Lunettes de protection selon l'une quelconque des revendications précédentes, **caractérisées en ce que** les branches de monture (24, 26) sont pourvues au niveau de leurs extrémités intérieures à chaque fois d'un tourillon (60) avec lequel elles peuvent être articulées au casque (70) et peuvent être encliquetées par engagement par friction ou par formes au moins dans la position de rangement des lunettes de protection (20).

8. Lunettes de protection selon l'une quelconque des revendications précédentes, **caractérisées en ce que** le bras de support de lunettes (30) de chaque branche de monture (24, 26) présente une rainure longitudinale (44) qui forme pour le bras de lunettes (28) de la branche de monture (24, 26), un guidage en queue d'aronde.

9. Lunettes de protection selon la revendication 8, **caractérisées en ce que** la rainure longitudinale (44) de chaque bras de support de lunettes (30) est ouverte transversalement à sa direction longitudinale.

10. Lunettes de protection selon la revendication 6 ou 7, **caractérisées en ce que** chaque bras de lunettes (28) se compose d'un matériau flexible élastiquement et présente un profilé en U ouvert dans la direction de l'autre branche de monture (24, 26), de section transversale plate.

11. Lunettes de protection selon la revendication 10, **caractérisées en ce que** la couronne (40) de renfoncements (42) est formée au niveau d'une ailette (43) façonnée sur le bras de lunettes (28), qui relie l'une à l'autre dans la région de chaque point d'articulation deux branches de U du profilé en U plat.

12. Lunettes de protection selon l'une quelconque des revendications précédentes, **caractérisées en ce que** les bras de lunettes (28) peuvent être bloqués par engagement par correspondance de formes et élastiquement dans des positions longitudinales définies sur les bras de support de lunettes (30).

13. Lunettes de protection selon l'une quelconque des revendications précédentes, **caractérisées en ce que** dans une région de pont (54) du verre (22), un berceau d'appui (50) pour l'arête du nez et/ou pour les flancs du nez est monté sur le verre (22)

14. Lunettes de protection selon l'une quelconque des revendications précédentes, **caractérisées en ce que** les deux branches de monture (24, 26) sont réalisées avec une symétrie spéculaire.

15. Casque de protection (70) comprenant des lunettes de protection (20) selon l'une quelconque des revendications précédentes.

16. Casque de protection selon la revendication 15, **caractérisé par** une coque de casque (71) et une structure interne (73) qui, au moins dans la région avant du casque (70), délimitent entre elles un espace dans lequel les lunettes de protection (20) peuvent être relevées vers le haut en vue de leur escamotage.

17. Casque de protection selon la revendication 16, **caractérisé en ce qu'**une bande frontale (72) de sa structure interne (73) est pourvue d'ouvertures (74) pour l'articulation des branches de monture (24, 26) des lunettes de protection (20), la position des ouvertures (74) étant choisie de telle sorte que les lunettes de protection (20) puissent être déplacées sans variation de longueur des branches de monture (24, 26) dans et hors de la position escamotée.
